# EUROPEAN PATENT APPLICATION

(11) **EP 2 489 693 A1**
(43) Date of publication of application: **22.08.2012**
(21) Application number: 11425038.4
(22) Date of filing: 21.02.2011
(51) Int. Cl.: C08J 5/12, C09J 5/06, B65B 51/02, B65B 51/10, C09J 177/08

(54) **Process for heat activation of a polyamide adhesive**

(71) Applicant: Henkel AG & Co. KGaA, 40589 Düsseldorf (DE); Henkel Italia S.p.A., 20157 Milano (IT)
(72) Inventor: Leon, Gaelle, 07300 Toumon (FR); Marchese, Luca, 20020 Arese (IT)

(57) **Abstract**

A process to bond flat substrates with adhesives wherein (i) a solution of an adhesive is applied to a substrate, (ii) the adhesive forms a layer on the substrate by evaporation of the solvents, (iii) the adhesive layer is activated by heating to about 75 to 200 °C, (iv) the adhesive layer of the substrate is joined to a second surface of the same or different substrate, wherein the adhesive is a solution of a polyamide in organic solvents.

## Description

### Field of the invention

The invention relates to solvent borne adhesive based on polyamide resins which adhesive shall be applied in form of a layer on a substrate and which after being activated at a temperature from 50 to 160°C can be bonded with a second substrate surface.

### Prior art

For the closing of packaging materials different types of adhesives are known. They can be selected according to the process technology. One type includes thermoplastic hot melt adhesives. These adhesives are stored in a solid form, prior to application they are molten and applied as melt adhesive. After application of the adhesive the surface has to be bonded against the other substrate within a period of time before cooling. The adhesive is transferred into a solid state, which keeps the substrates together.

Other types of adhesives are reactive hot melt adhesives. They are applied according to the same principle, but in addition to the first bonding force the adhesive is subject to a further chemically crosslinking which provides the ultimate cohesion to the bonding.

Also solvent borne adhesives are known. As solvents water can be used or organic solvents. The adhesive is applied as liquid to one substrate, the solvents evaporate and in an intermediate wet state the two substrates are joined together. Hot melt adhesives can be applied in known and fast process steps, but they need special equipment to be applied at elevated temperature. Additionally the time between application of the adhesive and closing both substrates is limited by the cooling of the adhesive. Solvent borne adhesives can be applied without heating the adhesive, but the process needs some precaution as solvents have to evaporate and also the bonding process has to be performed just after application of the adhesive layer.

US 2003/041963 discloses a reactivatable adhesive. As adhesive hot melt adhesives are disclosed, for example based on EVA. The adhesive are disclosed as 100% solid materials. After application the layer of the material shall be activated by radiation heating and shall be bonded prior to solidification.

US 2004/166238 discloses an apparatus, which shall deposit an adhesive, the adhesive layer shall be activated by ultrasonic energy. As adhesive water borne adhesives or hot melt adhesives are disclosed.

It is known to apply to substrates adhesive layers. Such coated areas can be thereafter used to bond such materials to other substrates. For increasing the flexibility of the manufacturing process it is preferred to separate the step of application of the adhesive from the bonding step. For example this is used in manufacturing labels or packaging.

Packaging materials are often manufactured from paper or cardboard or carton. Using such materials, it is difficult to apply water borne adhesives, which will deliver water into the packaging materials. Such humidity may influence the properties of the packaging material. In case of packaging substrates from polymeric material or a cardboard coated with polymeric material during application of water borne coatings the solvent has to evaporate which in case of water is energy consuming.

In case of hot melt adhesives it is known that such materials are applied at higher temperature. So in this case the substrate material needs to have some stability against elevated temperature, so that the hot applied adhesive may not deteriorate the properties of the packaging materials. Especially if food products are packaged, also a change in color is not accepted by the customer. Additionally, the equipment to apply such hot melt adhesives is expensive.

In modern packaging materials often substrates are joined together, which shall have a good optical appearance. This can be achieved by printing, coating or laminating normal paper or cardboard substrates to provide a brilliant surface. Often used substrates are made of cardboard, but the properties of such processed surfaces are different. According to the coating or printing material the surface can show polar or non polar properties. So, the adhesive used to close packaging boxes, bags or cases should provide a good adhesion to such modified substrates.

Another field of use for pre-coated substrates is the coating of labels. In such case the substrates are selected from polymeric films, paper, cardboards or other flat and flexible materials. At least one side of the label can be printed the other side shall be coated totally or partly by an adhesive. To improve the flexibility of the application process it is useful to separate the manufacturing process from the gluing process. So adhesives are required which can be stored after application in the first substrate.

### Summary of the invention

It is the object of the present invention to provide a process to bond flat substrate materials, whereby the adhesive shall be applied in a thin layer. The adhesive shall provide a good adhesion to different substrates and after drying shall provide a non-sticky layer. These coated flat substrates shall be non-blocking and shall be storable against a non-coated surface. Additionally it is an object of the present invention to process such partially coated substrates by activating the adhesive layer by heating and after heating the adhesive layer joining this substrate to a second surface.

The object is solved by providing a process to bond flat substrates with adhesives wherein a solution of an adhesive is applied to a substrate, the adhesive forms a layer on the substrate by evaporation of the solvents, the adhesive layer is heated to 75 to 200 °C and the activated adhesive layer is bonded to a second substrate, wherein the adhesive is a solution of a polyamide in organic solvents.

Another object of the invention is a substrate selected from paper, cardboard, polymeric films, also as printed or coated or multilayer substrate, comprising at least one area which is covered by a layer of a solid adhesive, wherein the adhesive is applied as solution of a polyamide in organics solvents, such layer being dried and providing a heat reactivatable adhesive.

The substrates useful for the invention include materials made of flexible or semirigid cellulosic material, including paper, chipboard, boxboard, paperboard or cardboard materials. Cellulosic materials such as a paperboard, boxboard, cardboard and chipboard consist of relatively thick sheet materials that are comprised of bonded, small discrete fibers comprising cellulose. In addition to cellulose fibers, synthetic fibers such as polyester, polypropylene, polyethylene, polyamide, and nylon fibers, as well as chemically modified cellulosic fibers may be used in the manufacture of sheet materials. The surface of these substrates may be changed in its properties by printing, coating, laminating for example with a thermoplastic coating or other processes to provide a surface which show an improved optical and/or technical appearance.

Such flat materials are often cut and formed into specific shape which after being folded and glued can form packages or containers. Packages or containers shall include cartons, cases, trays, bags, boxes and the like. Such are used to package consumer goods such as food and beverages, pharmaceuticals, cosmetics, used in the manufacturing of packaging materials.

Another type of substrates is selected from polymeric films or paper, in flexible form. Preferably the substrates are films or preformed parts of films. They can be used as mono-layer or as multi-layer material, the surface can be coated, printed, or laminated to modify appearance and properties of the film forming material. They can be made for example of plastics, e.g. of polyethylene, polypropylene, polystyrene, polyvinyl chloride or cellophane, especially of polyethylene or of paper. Such substrates are flexible and can be used as label or formed to flexible pockets. The adhesive used in the invention can be used for gluing for example labels, bags or pockets to packaging, dockets to solid substrates, like glass, coated or uncoated paper, paperboard packaging, metal packagings and plastics, such as, for example, PET, PEN, PP, PVC and PS.

The adhesive used according to the invention shall comprise at least one polyamide and at least one organic solvent. Optionally the adhesive may comprise other polymers or auxiliaries. The solid content of the adhesive is in the range of 5 to 40 wt.%, preferably between 10 to 30 wt.%. As solvents the normal solvents can be used which are capable of dissolving polyamides.

The polyamides may be selected in different compositions provides however that the molecular weight is selected so that it is soluble in organic solvent and has sufficient cohesive strength to provide an adhesive bond between substrates. The generally known dicarboxylic acids and diamines can be used as components of the polyamide.

Examples for suitable dicarboxylic acids include C4 to C60 dicarboxylic acids, especially adipic acid, azelaic acid, succinic acid, dodecanedioic acid, glutaric acid, suberic acid, maleic acid, pimelic acid, sebacic acid, undecanedioic acid or their mixtures. Dimerized fatty acids are obtained by coupling unsaturated long chain monobasic fatty acids, e.g. linolenic acid or oleic acid. The acids are well known and commercially available. As minor parts also monocarboxylic acids or tricarboxylic acids can be used, but specifically no crosslinked polyamides shall be obtained.

The diamine components are selected of one or more aliphatic diamines, preferably with an even number of carbon atoms, wherein the amine groups are at the ends of the carbon chains. The aliphatic diamines can comprise 2 to 20 carbon atoms, wherein the aliphatic chain can be linear or slightly branched. Practical examples are ethylenediamine, diethylenetriamine, dipropylenetriamine, 1,4-diaminobutane, 1,3-pentanediamine, methylpentanediamine, hexamethylenediamine, trimethyl-hexamethylenediamine, 2-(2-aminomethoxy)ethanol, 2-methypentamethylenediamine, C11-neopentanediamine, diaminodipropyfmethylamine, 1,12-diaminododecane. The particularly preferred aliphatic diamines are C4-C20 diamines with an even number of carbon atoms.

The amino components can also comprise cyclic diamines or heterocyclic diamines such as for example 1,4-cyclohexanediamine, 4,4'-diaminodicyclohexylmethane, piperazine, cyclohexane-bis-(methylamine), isophoronediamine, dimethylpiperazine, dipiperidylpropane, norbornanediamine or m-xylylenediamine. Also polyoxyalkylene-diamines can be incorporated, such as for example polyoxyethylenediamines, polyoxypropylenediamines or bis-(di-aminopropyl)-polytetrahydrofuran. The polyoxyalkylenediamines are particularly preferred in this respect. Their molecular weight is between 200 and 4 000 g/mol. In addition, amino carboxylic acids or their cyclic derivatives can be incorporated, for example 6-Amino hexanoic acid, 11-amino undecanoic acid, laurolactam, ε-caprolactam.

A further suitable class of diamines is derived from the dimer fatty acids and comprises primary amine groups instead of the carboxyl groups. These kinds of substances are often called dimer diamines. They are obtained by forming nitriles from the dimerized fatty acids and subsequent hydrogenation.

When choosing the monofunctional, difunctional or trifunctional raw materials to be added, one has to take into account that meltable and dissolvable, for example uncrosslinked products are to be obtained. For example, if crosslinking/gelling occurs, then lowering the fraction of trifunctional components (trimer fatty acids) and/or increasing the content of monofunctional amines or fatty acids can result in polymers that do not tend to gel.

Examples of suitable polyamides are described in EP 749463 being based on dicarboxylic acids and polyether diamines. Another type of polyamides is disclosed in EP 204 315 being based on dimer fatty acids and polyamines.

For example useful polyamides are based on dimer fatty acid-free polyamides. They can be manufactured from 40 to 50 mol %, preferably 50 mol %, of one or more C4-C18 dicarboxylic acid(s), 5 to 45 mol %, preferably 15 to 40 mol % of at least one aliphatic diamine, 5 to 40 mol %, preferably 20 to 30 mol %, of one or more cycloaliphatic diamines, 0 to 40 mol %, preferably 5 to 25 mol % of polyether diamines, wherein the sum of the added diamines and the carboxylic acids each is 50 mol %, such that dicarboxylic acid components and diamine components are present in approximately equivalent molar fractions.

Another example of useful polyamides are based on dimerized fatty acid as the essential component. Such polyamides are, for example, comprising of 35 to 49.5 mol % dimerized fatty acid as well as, 0.5 to 15 mol % monomeric fatty acid containing 12 to 22 carbon atoms, 2 to 35 mol % polyoxyalkylenediamines and 15 to 48 mol % aliphatic diamines containing 2 to 40 carbon atoms, wherein up to 65 % of the dimerized fatty acids can be replaced by aliphatic dicarboxylic acids containing 4 to 12 carbon atoms.

Another example of useful polyamides can be obtained from 20 to 49.5 mol % dimerized fatty acid, 0.5 to 15 mol % monomeric fatty acid containing 12 to 22 carbon atoms, and 20 to 55 mol % of an amine containing 2 to 40 carbon atoms and carrying at least 2 primary amino groups, wherein up to 65% of the dimerized fatty acids can be replaced by aliphatic dicarboxylic acids containing 4 to 12 carbon atoms. In each case the sum of all carboxylic acid and of all amine shall add to 50 mol%.

### Detailed description of the invention

In general, the quantities of the amine and the carboxylic acids are selected so that the polyamides contain a small excess of amino groups. This may improve the adhesion to the substrates. The molecular weight (measured as the mass average molecular weight, as obtained using GPC, Mw) can range about 3000 to 60000 g/mol, preferably 15000 to 30000g/mol. The viscosity of these suitable polyamides is between 1000 and 20000 mPas (measured at 200 °C., Brookfield Thermosel RVT, EN ISO 2555), preferably between 5000 to 15000 mPas. The softening point is about 90 to 180 °C, preferably up to 150 °C.

The adhesive composition shall contain polyamides, at least one solvent and optionally other components as additives. Additives can include, for example, plasticizers, stabilizers, waxes, adhesion promoters, fillers, colorants and antioxidants. One or more of the additives can be incorporated in the adhesive. With these, certain applications-engineering properties such as, for example, cohesive strength, viscosity, and softening point can be influenced.

The composition may comprise in addition to the polyamides 0 up to 25 wt-% of other polymers which can be blended to the polyamide. Examples of such polymers include polyurethanes, polyacrylates or polyesters. They shall also be compatible with the polyamide to get a homogenous mixture. Preferably only polyamides are used as polymer.

The additives can be selected to improve specific properties of the adhesive. Fillers can be employed in order to improve the adhesive properties. They comprise solid, inert substances, such as for example chalk, titanium dioxide, silicon dioxide or other pigments. The amount in the adhesive is mostly less than 15 wt.%, particularly between 0 and 10 wt.%. Also gloss/matting agents can be used as additive. Another group of additives are rheologic agents, for example highly dispersed silica.

The adhesive may comprise at least one tackifying resin as an additive. The resin improves an additional tackiness. It is added in an amount of up to 30 wt-%, preferably 5 to 20 wt-%. In particular resins with a softening point from 70 to 130 °C (ring and ball method, DIN 52011) can be selected. Plasticizers are utilized by preference in order to adjust the viscosity or flexibility, and are contained in the adhesive according to the present invention generally in a concentration from 0 to 10 wt%, by preference in a concentration from 0 up to 5 wt%. Suitable plasticizers are medicinal white mineral oils, naphthenic mineral oils, paraffinic hydrocarbon oils polypropylene, polybutene, and polyisoprene oligomers, hydrogenated polyisoprene and/or polybutadiene oligomers, benzoate esters, phthalates, adipates, polypropylene glycol, vegetable or animal oils and derivatives thereof. The purpose of the stabilizers is to protect the adhesive composition. To be mentioned here in particular are the antioxidants or also light-protection agents. They are added to the adhesive usually in quantities of up to 3 wt%, by preference in quantities from approximately 0.1 to 1.0 wt%. The adhesive composition may contain also anti-blocking agents, which prevent the solid layer of the adhesive from blocking. On the other hand also adhesion promotors can be used in an adhesive composition. As preferred embodiment of the invention a thermoplastic adhesive is used. But it is also possible to include crosslinking substances, which after being applied as adhesive layer shall crosslink in the activation process step. The adhesive is manufactured by known methods. For example, the polyamide is manufactured in a solvent. Then the additives can be added to the solution of the polyamide. It is also possible to mix the polymer and the additives in a molten form and thereafter dissolve this mixture in one or more solvents.

The adhesive which is suitable according to the invention is a solvent borne adhesive. It shall comprise at least one organic solvent which has a boiling point to less than 200 °C.

These organic solvents can be selected from the groups of monoalcohols, diols, triols or polyols, of ethers, esters, ketones and/or amides or hydrocarbon solvents. Preferred in this context are polar organic solvents.

Examples of such solvents are methanol, ethanol, n-propanol or iso-propanol, butanols, glycol, propane diol or butane diol, glycerin, diglycol, propyl diglycol or butyl diglycol, hexylene glycol, ethylene glycol methyl ether, ethylene glycol ethyl ether, ethylene glycol propyl ether, ethylene glycol mono-n-butyl ether, diethylene glycol methyl ether, diethylene glycol ethyl ether, propylene glycol methyl ether, propylene glycol ethyl ether or propylene glycol propyl ether, dipropylene glycol methyl ether or, methoxy trigylcol, ethoxy trigylcol or butoxy trigylcol, 1-butoxy ethoxy-2-propanol, 3-methyl-3-methoxy butanol, propylene-glycol-t-butyl ether as well as mixtures. Other examples include toluene, xylene, butyl acetate, amyl acetate, isobutyl acetate, methyl isobutyl ketone, methoxybutyl acetate, cyclohexane, cyclohexanone, diethyl ketone, diisobutyl ketone, dioxane, ethyl acetate, ethylene glycol monobutyl ether acetate, ethylene glycol monoethyl acetate, 2-ethylhexyl acetate, glycol diacetate, heptane, hexane, isobutyl acetate, isooctane, isopropyl acetate, methyl ethyl ketone, tetrahydrofuran or mixtures of two or more of said solvents. The mixture of the solvent may contain up to 10% of water so no dried solvents are required.

The amounts of the solvents are from 60 wt-% to 95 wt-% of the total adhesive composition. The solvents shall evaporate after application of the adhesive, preferably the boiling point (at 1013 mbar) is less than 150 °C.

Another object of the present invention is a solvent borne adhesive comprising 5 to 40 wt-% of at least one polyamide, 0 to 30 wt-% of additives, and 95 to 60 wt-% organic solvents, wherein the sum of the components makes up 100 wt-%. Preferably the additives may include up 15 wt-% of the solid content of the adhesive. In another preferred embodiment of the invention the solvents are selected from organic solvent having a boiling point less than 150 °C, preferably less than 120 °C.

The adhesive is generally colorless. It shall have a viscosity between 50 mPas and 2000 mPas at 30 °C (measures according to Brookfield, DIN Iso .2555), but preferably a viscosity of 10 to 200 sec (Ford cup No 4, 25°C) is used, most preferred between 20 to 100 sec. The viscosity can be adjusted by addition of some portions of solvents. Another way to adjust the viscosity includes the addition of small amounts of thixotropic agents.

Generally, the substrates consist mainly of thermoplastic plastics in film form or they are paper-based. They can be preformed as label or a flat precursor of a packaging material. The films can be colored, printed, metallized, colorless or transparent. Single-ply or multi-ply films can be used. The films usually have a layer thickness between 5 and 300 µm, especially between 10 and 150 µm.

The process according to the invention can be applied for different substrates. As substrates flat substrates are used. On the surface the solvent borne adhesive is applied. The application temperature is not critical, it shall be between 10 to 40°C, more specifically between 20 to 30 °C. The adhesive has a low viscosity, so the known processes of application of such adhesives can be used. Examples are spraying, roller coating, doctor blade coating or preferably by a printing process. For such application it is preferred to select adhesives having a viscosity of less than 1000 mPas at 20 °C.

After application of the adhesive the solvents may evaporate. This can be accelerated by blowing gases or air on the printed surface, additionally the temperature of the surface can be raised for example by heating the air or by IRradiation.

The adhesive shall be applied in an amount of 2 to 50 g/m² (solids), preferably from 2 to 10 g/m². According to one embodiment of the invention the whole surface of the substrate shall be covered with an adhesive layer. For example in case of labels it is possible to coat the adhesive layer to one side of the substrate. In another embodiment of the invention, the substrate is only coated on certain areas with the adhesive layer. For example a label can be coated only at the outer border. In a different embodiment the substrates are packaging materials. Such packaging is preformed in its shape as flat substrate, it can be folded to form a packaging. On the surfaces which shall be bonded together to get the folded form, the adhesive will be applied. The area of the adhesive is selected so that a packaging material can be formed. This can be selected by a person skilled in the art according to his specific knowledge.

The adhesive layer is nearly colorless. In a different embodiment the adhesive layer may contain a pigment or dye so that it is colored and the coating area is visible.

The flat substrates, covered with the adhesive layer can be stored. One specific embodiment of the adhesive used in the invention provides an adhesive layer, which is non-blocking at about 35 °C. The adhesive layer is not tacky. It can be stapled and the areas covered with the adhesive layer will not block and stick to the other parts of the flat substrate. So, it is possible to prepare, print, cut and apply the adhesive and prepare the flat substrates in one place. The substrate can be stored and it can be further processed in a later stage of the production process.

According to the invention, the flat substrates shall be bonded together by activating the adhesive layer at elevated temperature. The temperature for activating shall be about 75 to 200 °C, preferably from 90 to 160 °C. This can be achieved by heating means, for example heat jaws, hot plates, rollers, radiation, hot air, IR or NIR-radiation. Devices to apply such heat to a surface are known to a person skilled in the art. The heating shall be performed in a short time to ensure that the substrate itself is not damaged by the heating. After heating the substrate is directly bonded to a second surface. In a specific embodiment of the invention the substrate is passed over a hot plate. In another specific embodiment the substrate is passed with the adhesive layer towards a radiation source selected from IR or NIR sources, so no direct contact adhesive layer heating device is required. In all cases sufficient energy is provided to heat and activate the adhesive layer on the substrate. The bonding is performed by pressing the two substrates together. The adhesive layer will cool down and bond the substrates together.

A specific embodiment of the invention is a method to apply the adhesive as labeling adhesive. Another embodiment includes the use as adhesive in packaging. If the process is directed to bond labels to other substrates as containers, it is possible that the substrate - in this case a label - is heated at one side and immediately thereafter bonded to the second substrate, for example a box, bottle or container. In case of using the process according to the invention in the manufacture of packaging materials, a packaging is coated on predefined areas with a layer of the above mentioned adhesives. This substrate can be stored. In a later process step the packaging is folded or bent into a form and the adhesive area is heated and immediately bonded to a second part of the substrate. This step can also be repeated, so that a packaging can be manufactured. The process is also suitable to close a packaging after it has been filled with its content.

Another object of the invention is a label, coated with a layer of an adhesive made of polyamide, which is applied as solvent borne adhesive. The labels are preferably manufactured from paper, polymeric film and other multilayer film forming substrates. The labels can be colored or they are clear. Typically, the labels are printed. At one side of the label an adhesive layer manufactured according to a process as disclosed above is applied. The adhesive shall be applied in an amount of more than 2 g/m². Such adhesive layer does not show adhesive properties at room temperature, according to the invention, the adhesive layer is non-blocking. So, according to the invention, it is possible to staple the coated labels to each other without the use of any release liners between the substrates. So, the labels according to the invention have the advantage that the waste manufactured during its use is diminished.

Another embodiment of the invention is a pre-shaped flat substrate coated partially with an adhesive according to the process mentioned above. This preformed flat substrates may be folded and bent to form the packaging. The form can be varied in many types, for example boxes, round forms or irregular forms. The adhesive is applied to the areas, which are necessary to form the box and bond certain parts together. The solvent borne adhesive can be applied and a solid adhesive layer is manufactured. Such preformed part can be stored and stapled after the adhesive layer has been formed and dried. In case of use the adhesive areas are heated and folded to be bonded to another part of the substrate.

The present invention shows improvements in processing. As the adhesive layer has to be activated at elevated temperature, it is possible to store the pre-coated substrates at ambient temperature. No blocking will occur and a bonding to a second substrate can be performed at a later stage of the manufacturing process. Another advantage of a process according to the invention is the low viscosity of the adhesive solution. So, it is possible to apply the adhesive as solution in known equipment, in particular printing devices, which are in many cases present in the present process of manufacturing. So, the application of the adhesive can by easily integrated into existing manufacturing line. After activating the adhesive layer by heat energy the substrates can be joined and bonded.

Another advantage of the present invention is the adhesion of a part processed according to the invention. Especially, if coated and printed surfaces are used, the solvent borne polyamide adhesive shows a good adhesion to such surface. So, the bonding process of a large number of substrates is improved. Additionally, no larger amounts of water are contained in the adhesive; so in case of water sensitive substrates these are not suffering from the uptake of water in the substrate.

The hot melt pressure sensitive adhesives to be used according to the invention are employed for bonding various substrates. In particular different containers can be made from the pre-formed and precoated substrates, like boxes, drums or other forms. In another form the bonded labels can be applied to rotationally symmetrical containers, such as beakers, cans, cartridges or also to rectangular packages.

### Examples

The examples shall further describe the invention.

### Example 1:

A polyamide in accordance with the invention is prepared by reacting the following materials (the amount stated for each component is in parts by weight):

| Component | |
|---|---|
| Distilled dimer fatty acid | 64 |
| Azelaic acid | 18 |
| Ethylene Diamine | 3 |
| Piperazine (anhydrous) | 14 |
| Antioxidant | 1 |

The mixture is heated and water is distilled off. The resulting polyamide has a molecular weight (MW, GPC) of about 17000 Dalton. The softening point is about 135 °C

### Example 2:

A polyamide (18 parts) according to example 1 was dissolved by stirring and warming the polymer in a solvent mixture consisting of 40 parts isopropanol, 40 parts cyclohexane, 2 parts water until a solution is obtained. In the clear solution 1 part pyrogenic SiO2 is dispersed.

The viscosity is about 200 mPas, 25 °C.

### Example 3:

The adhesive was applied to the back side of a printed label (5 x 10 cm). As labels a polyester film, a paper film or a cellophane film were used. The layer was dried and an amount of 5g /m² was measured.

The labels were stapled (10 pieces) and after 24 h / 25 °C / 70 °C rel. humidity the labels can be separated without blocking together.

A label was heated by an IR-lamp for 5 sec. Immediately the label was bonded to a metallic can as substrate. A good adhesion was observed.

### Example 4:

The adhesive was applied to an area of a card board substrate (10 x 20 cm). The layer was formed in a 1x10 cm part at one side of the substrate. The layer was dried and an amount of 5g /m² was measured.

The pieces were stapled (10 pieces) and after 24 h they can be separated without blocking together.

The coated area was heated by an IR-lamp for 5 sec. Immediately thereafter a cylinder was formed and pressed together.

A good adhesion was observed.

## Claims

1. A process to bond flat substrates with adhesives wherein
- a solution of an adhesive is applied to a substrate,
- the adhesive forms a layer on the substrate by evaporation of the solvents,
- the adhesive layer is activated by heating to about 75 to 200 °C,
- the activated adhesive layer is bonded to a second surface,
and the adhesive is a solution of a polyamide in organic solvents.

2. A process according to claim 1, **characterized in that** polyamide has a molecular weight (M_{w}) of 3000 to 60000 g/mol with a softening point between 90 to 180 °C.

3. A process according to claim 1 to 2, **characterized in that** the solvent is selected from hydrocarbon solvents, alcohols with a molecular weight less than 150 g/mol, ketones, esters of carboxylic acids having less than 8 C-atoms or mixtures thereof with a solid content of the adhesive between 5 to 40 wt-%.

4. A process according to claim 1 to 3, **characterized in that** the adhesive further contains up to 30 wt-% additives.

5. A process according to claim 1 to 4, **characterized in that** the adhesive is applied in an amount of 2 to 50 g/m² (solids).

6. A process according to claim 1 to 5, **characterized in that** the adhesive is applied by printing.

7. A process according to claim 1 to 6, **characterized in that** the solvent has an boiling point of less than 150 °C.

8. A process according to claim 1 to 7, **characterized in that** the substrate is selected from card board, paper, polymeric films, metallized films, including printed surfaces, lacquered surfaces or coated surfaces.

9. A process according to claim 1 to 8, **characterized in that** the adhesive layer is heated by jaws, rollers, radiation, hot air, preferably IR or NIR-radiation or a hot plate.

10. A process according to claim 1 to 9, **characterized in that** the substrate is processed to form a packaging and the packaging is closed by joining a second surface of the substrate to the activated adhesive layer.

11. A process according to claim 10, **characterized in that** an adhesive layer is applied on both surfaces to be joined.

12. A process according to claim 1 to 10, **characterized in that** the adhesive layer is applied to one side of a label and is applied after activation to containers preferably boxes, bottles, bags, cans or drums.

13. Use of a solvent borne polyamide adhesive comprising a polyamide having a molecular weight (M_{w}) from 3000 to 60000 g/mol and an organic solvent having a boiling point of less than 150 °C, to manufacture solid layers of an adhesive wherein the adhesive layer is non blocking at 35 °C.

14. Use according to claim 13, wherein the adhesive layer is activated by heat prior to joining the substrates.

15. Label coated with a layer of an adhesive according to claim 13, **characterized in that** the adhesive comprises a polyamide having a molecular weight from 3000 to 60000 g/mol and the layer is non-blocking at 25 °C.

16. Preformed flat substrate coated partially with a layer of an adhesive according to claim 13, the adhesive comprising a polyamide having a molecular weight from 3000 to 60000 g/mol, the substrate being of a preformed shape to deliver a packaging.
